# EUROPÄISCHE PATENTANMELDUNG

(11) **EP 1 892 553 A1**
(43) Veröffentlichungstag der Anmeldung: **27.02.2008**
(21) Anmeldenummer: 07014248.4
(22) Anmeldetag: 20.07.2007
(51) Int. Cl.: G02B 21/06

(54) **Operationsmikroskop mit Beleuchtungseinrichtung**

(30) Priorität: 25.08.2006 DE 102006039802; 10.10.2006 DE 102006047723
(71) Anmelder: Carl Zeiss Surgical GmbH, 73447 Oberkochen (DE)
(72) Erfinder: Steffen, Joachim, 73463 Westhausen (DE); Rudolph, Frank, 73434 Aalen (DE); Haisch, Michael, 73430 Aalen (DE); Schneider, Martin, 89551 Königsbronn (DE); Miesner, Hans-Joachim, 73434 Aalen (DE); Brune, Nicole, 73430 Aalen (DE)
(74) Vertreter: Gauss, Nikolai

(57) **Zusammenfassung**

Die Erfindung betrifft ein Operationsmikroskop 100, das sich insbesondere zum Einsatz in der Neurochirurgie eignet. Das Operationsmikroskop hat eine Beleuchtungseinrichtung 101 für das Bereitstellen von Beleuchtungslicht in einem mit dem Operationsmikroskop 100 untersuchten Operationsbereich 117. Die Beleuchtungseinrichtung 101 enthält eine Hochleistungslichtquelle 102, die Intensitäteinstellmittel 112 aufweist. Die Intensitäteinstellmittel 112 ermöglichen es, die Intensität des zum Objektbereich 117 geführten Beleuchtungslichts 116 zwischen einem Maximalwert und einem Minimalwert einzustellen. Das Operationsmikroskop 100 hat eine Steuereinheit 170 für die Beleuchtungseinrichtung 101, die ein Bedienungsmodul 172 umfasst, über das die Beleuchtungseinrichtung 101 aktiviert und gesteuert werden kann. Die Steuereinheit steht zur Einstellung der Intensität des zum Operationsbereich 117 geführten Beleuchtungslichts 116 mit der einstellbaren Filtereinheit 112 in Wirkverbindung. Erfindungsgemäß ist ein Signalgenerator 175 vorgesehen, der ein Warnsignal abgibt, wenn über das Bedienungsmodul 172 eine Intensität von Beleuchtungslicht eingestellt wird, die einen in einem Speicher 171 abgelegten Sicherheitsgrenzwert überschreitet.

## Beschreibung

Die Erfindung betrifft ein Operationsmikroskop, insbesondere für die Neurochirurgie, mit einer Beleuchtungseinrichtung für das Bereitstellen von Beleuchtungslicht in einem mit dem Operationsmikroskop untersuchten Operationsbereich, die eine Hochleistungslichtquelle enthält und Intensitätseinstellmittel zum Einstellen der Intensität des zum Operationsbereich geführten Beleuchtungslichts zwischen einem Maximalwert und einem Minimalwert umfasst, mit einer Steuereinheit für die Beleuchtungseinrichtung, die ein Bedienungsmodul aufweist, über das die Beleuchtungseinrichtung gesteuert werden kann, und die zur Einstellung der Intensität des zum Operationsbereich geführten Beleuchtungslichts mit den Intensitätseinstellungsmitteln in Wirkverbindung steht.

Ein Operationsmikroskop der eingangs genannten Art wird von der Carl Zeiss Surgical GmbH unter der Bezeichnung OPMI^{®} Pentero vertrieben. Dieses Operationsmikroskop ist für die Neurochirurgie ausgelegt und hat zur Beleuchtung des Operationsbereichs eine Beleuchtungseinrichtung mit einer 300 Watt Xenon Hochleistungslichtquelle. Die Intensität des von der Beleuchtungseinrichtung bereitgestellten Beleuchtungslichts kann mittels einer Siebblende quasi kontinuierlich zwischen einem Minimalwert und einem Maximalwert eingestellt werden. Das Operationsmikroskop ermöglicht die Visualisierung von Operationsbereichen mit Fluoreszenzlicht im infraroten und blauen Spektralbereich.

Um mit einem Operationsmikroskop feinste Gewebestrukturen sichtbar machen zu können, ist es erforderlich, diese gut zu beleuchten. Dies bedingt eine leistungsstarke Beleuchtungseinrichtung im Operationsmikroskop. In den Beleuchtungseinrichtungen von Operationsmikroskopen für die Neuro- und HNO-Chirurgie werden deshalb Hochleistungslichtquellen eingesetzt. Beleuchtungslicht, das in einen Operationsbereich geführt wird, wechselwirkt jedoch mit Körpergewebe. Dies führt insbesondere zu Erwärmung und kann, für den Fall, dass die Beleuchtungsintensität zu hoch ist, Gewebestrukturen nachhaltig schädigen, selbst wenn das von den Hochleistungslichtquellen abgegebene UV- und Infrarotlicht ausgefiltert wird.

Um ein Operationsmikroskop für eine chirurgische Operation optimal einstellen zu können, ist es günstig, wenn der Operateur die Möglichkeit hat, insbesondere Intensität und spektrale Zusammensetzung aber auch die Größe des Leuchtfeldes des mit der Beleuchtungseinrichtung im Operationsmikroskop erzeugten Beleuchtungslichts, sowie den Arbeitsstand des Operationsmikroskops in Bezug auf den Objektbereich zu variieren.

Aufgabe der Erfindung ist es, ein Operationsmikroskop bereitzustellen, bei dem trotz einer Beleuchtungseinrichtung mit hoher Variabilität im Hinblick auf die Intensität des bereitgestellten Beleuchtungslichts eine Schädigung von Gewebestrukturen eines Patienten aufgrund Fehlbedienung unterbunden wird.

Diese Aufgabe wird durch ein Operationsmikroskop der eingangs genannten Art gelöst, bei dem ein Signalgenerator vorgesehen ist, der ein Warnsignal abgibt, wenn über das Bedienungsmodul eine Intensität von Beleuchtungslicht eingestellt wird, die einen in einem Speicher abgelegten Sicherheitsgrenzwert überschreitet.

In Weiterbildung der Erfindung bewirkt im Falle einer Aktivierung der Beleuchtungseinrichtung über das Bedienungsmodul die Steuereinheit eine Einstellung der Filtereinheit auf einen ersten Beleuchtungseinrichtungs-Aktivierungswert, bei dem das Licht der Hochleistungslichtquelle in der Beleuchtungseinrichtung abgeschwächt wird. Auf diese Weise wird ein Operationsmikroskop geschaffen, das bei Einschalten der Beleuchtungseinrichtung einen Operationsbereich nicht mit zuviel Beleuchtungslicht belastet.

In Weiterbildung der Erfindung weist das Bedienungsmodul Mittel zur Einstellung des ersten Beleuchtungseinrichtungs-Aktivierungswerts auf. Auf diese Weise kann der Wärmeempfindlichkeit unterschiedlicher Körpergewebe, die operiert werden, Rechnung getragen werden.

In Weiterbildung der Erfindung ist ein Signalgenerator vorgesehen, der ein Warnsignal abgibt, wenn über das Bedienmodul ein erster Beleuchtungseinrichtungs-Aktivierungswert eingestellt wird, der einen in einem Speicher abgelegten Sicherheitsgrenzwert für den ersten Beleuchtungseinrichtungs-Aktivierungswert überschreitet. Auf diese Weise wird eine Bedienperson davon in Kenntnis gesetzt, dass bei Betrieb des Operationsmikroskops mit der vorgenommenen Geräteeinstellung die Gefahr von Gewebeschäden besteht.

In Weiterbildung der Erfindung weist die Beleuchtungseinrichtung ein spektrales Filter zur Einstellung der spektralen Zusammensetzung des Beleuchtungslichts aus der Beleuchtungseinrichtung auf. Auf diese Weise ist es möglich, zu vermeiden, dass ein Operationsbereich mit Beleuchtungslicht belastet wird, das nicht zur Bildentstehung beiträgt.

In Weiterbildung der Erfindung ist das spektrale Filter als Wärmeschutzfilter ausgebildet. Auf diese Weise kann die Belastung eines Operationsbereichs mit Wärmestrahlung unterbunden werden.

In Weiterbildung der Erfindung ist das spektrale Filter als Infrarot-Fluoreszenz-Anregungsfilter ausgebildet. Auf diese Weise kann Körpergewebe unter Verwendung von Fluoreszenzfarbstoffen, die bei Fluoreszenz Infrarotlicht abgeben, visualisiert werden.

In Weiterbildung der Erfindung ist das spektrale Filter als Blaulicht-Fluoreszenz-Anregungsfilter ausgebildet. Auf diese Weise wird die Fluoreszenzlichtuntersuchung eines Operationsgebiets im blauen Spektralbereich ermöglicht.

In Weiterbildung der Erfindung hat das Bedienungsmodul eine Eingabeeinheit zur Einstellung eines Infrarot-Fluoreszenz-Betriebsmodus, in dem das Infrarot-Fluoreszenz-Anregungsfilter in den Beobachtungsstrahlengang der Beleuchtungseinrichtung geschaltet ist. Auf diese Weise ist ein ergonomisches Arbeiten mit dem Operationsmikroskop möglich.

In Weiterbildung der Erfindung bewirkt die Steuereinheit bei Einstellung des Infrarot-Fluoreszenz-Betriebsmodus über die Eingabeeinheit des Bedienungsmoduls eine Einstellung der Filtereinheit auf einen zweiten Beleuchtungseinrichtungs-Aktivierungswert. Auf diese Weise kann vermieden werden, dass bei Umschalten des Operationsmikroskops in einen Betriebsmodus für Infrarotfluoreszenz Patientengewebe mit Fluoreszenzanregungslicht zu hoher Intensität belastet wird.

In Weiterbildung der Erfindung hat das Bedienungsmodul Mittel zur Einstellung des zweiten Beleuchtungseinrichtungs-Aktivierungswerts. Auf diese Weise kann das Operationsmikroskop entsprechend den Erfordernissen einer durchzuführenden Operation konfiguriert werden.

In Weiterbildung der Erfindung enthält das Operationsmikroskop einen Signalgenerator, der ein Warnsignal abgibt, wenn über das Bedienungsmodul ein zweiter Beleuchtungseinrichtungs-Aktivierungswert eingestellt wird, der einen in einem Speicher abgelegten Sicherheitsgrenzwert für den zweiten Beleuchtungseinrichtungs-Aktivierungswert überschreitet. Auf diese Weise erhält eine Bedienperson Kenntnis von der Gefahr, dass durch das Beleuchtungslicht der Beleuchtungseinrichtung des Operationsmikroskops Patientengewebe übermäßig belastet werden kann.

In Weiterbildung der Erfindung weist das Bedienungsmodul des Operationsmikroskops eine Eingabeeinheit zur Einstellung eines Blaulicht-Fluoreszenz-Betriebsmodus auf, in dem das Blaulicht-Fluoreszenz-Anregungsfilter in den Beleuchtungsstrahlengang der Beleuchtungseinrichtung geschaltet ist. Auf diese Weise kann das Operationsmikroskop bedienungsfreundlich für einen Blaulicht-Fluoreszenz-Betriebsmodus konfiguriert werden.

In Weiterbildung der Erfindung bewirkt die Steuereinheit bei Einstellung des Blaulicht-Fluoreszenz-Betriebsmodus über die Eingabeeinheit des Bedienungsmoduls eine Einstellung der Filtereinheit auf einen Dritten Beleuchtungseinrichtungs-Aktivierungswert. Auf diese Weise wird eine übermäßige Gewebebelastung bei Betrieb des Operationsmikroskops für Blaulicht-Fluoreszenz vermieden.

In Weiterbildung der Erfindung weist das Bedienungsmodul Mittel zur Einstellung des dritten Beleuchtungseinrichtungs-Aktivierungswerts auf. Auf diese Weise ist es möglich, das Operationsmikroskop für Operationen unter Einsatz von bei Blaulicht fluoreszierenden Farbstoffen zu konfigurieren und schnell für den Einsatz an Körpergewebe einzurichten, dessen Lichtempfindlichkeit verschieden ist.

In Weiterbildung der Erfindung ist in dem Operationsmikroskop ein Signalgenerator vorgesehen, der ein Warnsignal abgibt, wenn über das Bedienungsmodul ein dritter Beleuchtungseinrichtungs-Aktivierungswert eingestellt wird, der einen in einem Speicher abgelegten Sicherheitsgrenzwert für den dritten Beleuchtungseinrichtungs-Aktivierungswert überschreitet. Auf diese Weise wird die Möglichkeit geschaffen, einer Bedienperson die Gefahr von Gewebeschädigungen bei einer Operation, in der das Operationsmikroskop eingesetzt wird, zu vermitteln.

In Weiterbildung der Erfindung weist das Bedienungsmodul Mittel zur Einstellung der Filtereinheit zwischen einem Wert für minimale Intensität des Beleuchtungslichts der Beleuchtungseinrichtung und einem zweiten Wert für maximale Intensität des Beleuchtungslichts der Beleuchtungseinrichtung auf. Auf diese Weise wird es einem Operateur ermöglicht, die mit der Beleuchtungseinrichtung des Operationsmikroskops während einer medizinischen Operation bereitgestellte Lichtmenge so einzustellen, dass das Operationsgebiet immer gut gesehen wird.

In Weiterbildung der Erfindung entspricht bei dem Operationsmikroskop der maximal einstellbare Wert für die Intensität des Beleuchtungslichts dem ersten, zweiten oder dritten in dem Speicher abgelegten Sicherheitsgrenzwert. Auf diese Weise wird vermieden, dass ein Operateur die Beleuchtungseinrichtung des Operationsmikroskops versehentlich in einem Bereich betreibt, indem die Gefahr von Gewebeschädigungen besteht.

In Weiterbildung der Erfindung hat das Bedienungsmodul Mittel zu Einstellung des zweiten Werts für maximale Intensität des Beleuchtungslichts der Beleuchtungseinrichtung. Auf diese Weise kann dem Alterungsprozess einer Lichtquelle in einem Operationsmikroskop Rechnung getragen werden, der dazu führt, dass die von einer Lichtquelle abgegebene Lichtleistung mit zunehmender Betriebsdauer abnimmt.

In Weiterbildung der Erfindung ist bei dem Operationsmikroskop eine Lampenwechsel-Erfassungseinrichtung vorgesehen, die mit der Steuereinheit verbunden ist und bei einem erfassten Lampenwechsel eine Einstellung der Filtereinheit auf einen Ausgangswert bewirkt. Auf diese Weise wird sichergestellt, dass unmittelbar nach einem Lampenwechsel die Operationsmikroskop-Beleuchtungseinrichtung nicht zu intensitätsstarkes Beleuchtungslicht abgibt.

In Weiterbildung der Erfindung enthält das Operationsmikroskop einen Sensor zur Erfassung der Intensität des von der Beleuchtungseinrichtung bereitgestellten Beleuchtungslichts. Auf diese Weise ist es möglicht, automatisch zu erkennen, wann günstigerweise ein Lampenwechsel vorzunehmen ist.

In Weiterbildung der Erfindung sind in der Beleuchtungseinrichtung des Operationsmikroskops Mittel zur Einstellung der Filtereinheit vorgesehen, die einen Regelkreis umfassen, welcher die Intensität des von der Beleuchtungseinrichtung abgegebenen Beleuchtungslichts auf einen vorgegebenen Wert regelt. Auf diese Weise ist es möglich, automatisch die mit zunehmender Betriebsdauer einer Lichtquelle abfallende Lichtleistung auszugleichen, wodurch ein von der Betriebsdauer der Lichtquelle unabhängiger Helligkeitseindruck eines Operationsbereichs ermöglicht wird.

Vorteilhafte Weiterbildungen der Erfindung sind in den Zeichnungen dargestellt und werden nachfolgend beschrieben.

### Es zeigen:

- Fig. 1: ein Operationsmikroskop für die Neurochirurgie mit einer Steuereinheit, die ein Bedienungsmodul enthält, um eine Beleuchtungseinrichtung zu steuern;
- Fig. 2: eine als Siebfilter ausgebildete Filtereinheit des Operationsmikroskops aus Fig. 1;
- Fig. 3: ein Filterrad im Operationsmikroskop aus Fig. 1 mit mehreren Filterscheiben;
- Fig. 4: die Filtercharakteristik einer ersten Filterscheibe;
- Fig. 5: die Filtercharakteristik einer zweiten Filterscheibe;
- Fig. 6: die Filtercharakteristik einer dritten Filterscheibe; und
- Fig. 7: ein Eingabemenü der Steuereinheit für die Beleuchtungseinrichtung.

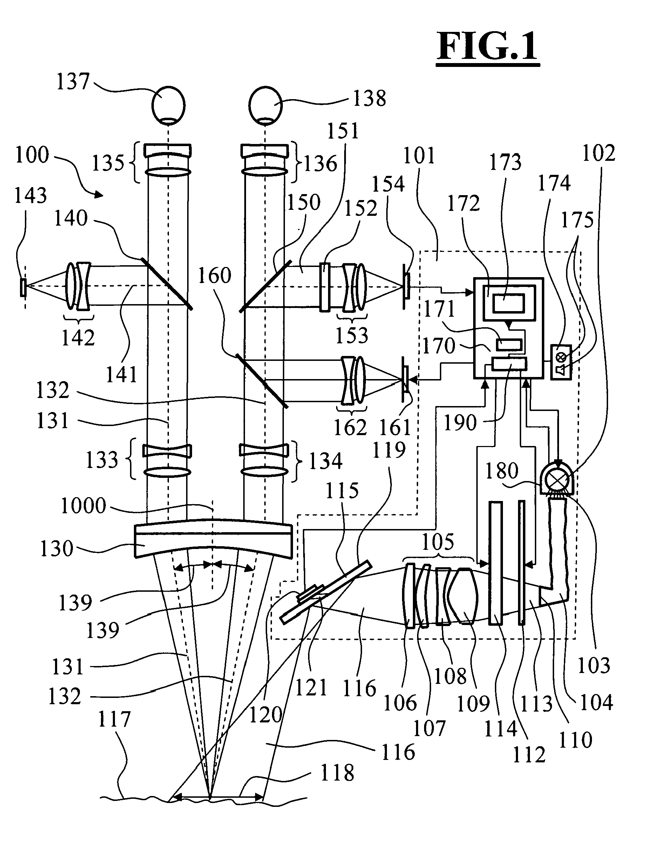

In Fig. 1 ist ein Operationsmikroskop 100 mit einer Beleuchtungseinrichtung 101 dargestellt. Die Beleuchtungseinrichtung 101 enthält eine Hochleistungslichtquelle 102 in Form einer leistungsstarken Xenon-Lampe. Die Hochleistungslichtquelle 102 erzeugt Beleuchtungslicht 103, das einem Lichtleiter 104 in der Beleuchtungseinrichtung 101 zugeführt wird. Die Beleuchtungseinrichtung 101 hat eine verstellbare Beleuchtungsoptik 105 mit vier Linsen 106, 107, 108 und 109. Zwischen der Beleuchtungsoptik 105 und einem Austrittsende 110 des Lichtleiters 104 ist eine einstellbare Filtereinheit 112 angeordnet. Die einstellbare Filtereinheit 112 ist als Siebfilter ausgebildet. Sie wirkt als Mittel zum Einstellen der Intensität des Beleuchtungslichts aus der Beleuchtungseinrichtung 101. Die Filtereinheit schwächt das aus dem Lichtleiter austretende Beleuchtungslicht 113 entsprechend einem einstellbaren Abschwächungsfaktor ab, der zwischen 0% und 100% liegt.

Der Filtereinheit 112 ist ein Filterrad 114 mit Filtern zur Einstellung der spektralen Zusammensetzung des Beleuchtungslichts 113 zugeordnet, das in der Beleuchtungseinrichtung 101 zur Beleuchtungsoptik 105 geführt wird.

Die Beleuchtungseinrichtung 101 hat weiter einen Umlenkspiegel 115. Das aus der Beleuchtungsoptik 105 austretende Beleuchtungslicht 116 wird mittels des Umlenkspiegels 115 zu einem Objektbereich 117 gelenkt. Das Beleuchtungslicht 116 bildet dort ein Leuchtfeld 118.

Auf der Rückseite 119 des Umlenkspiegels 115 ist ein Beleuchtungslicht-Intensitätsdetektor 120 angeordnet. Über eine Bohrung 121 im Umlenkspiegel 115 erhält der Beleuchtungslicht-Intensitätsdetektor 120 einen Bruchteil des Beleuchtungslichts, das von der Beleuchtungsoptik 105 zum Umlenkspiegel 115 geführt wird.

Das Operationsmikroskop 100 umfasst weiter ein Mikroskop-Hauptobjektiv 130, das mit einem linken Beobachtungsstrahlengang 131 und einem rechten Beobachtungsstrahlengang 132 durchsetzt ist. Auf der Objekt-abgewandten Seite des Mikroskop-Hauptobjektivs 130 ist im linken und rechten Beobachtungsstrahlengang 131, 132 ein verstellbares Zoomsystem 133, 134 angeordnet. Das Operationsmikroskop hat einen weiter dargestellten Binokulartubus mit Okularen 135, 136.

Ein Betrachter, der mit seinen Augen 137, 138 in die Okulare 135, 136 blickt, kann den Objektbereich 117 vergrößert und unter einem Stereowinkel 139 im Bezug auf die optische Achse 1000 des Mikroskop-Hauptobjektivs 130 stereoskopischen sehen.

Im linken Beobachtungsstrahlengang 131 des Operationsmikroskops 100 ist ein Strahlteiler 140 angeordnet. Dieser Strahlteiler 140 koppelt einen Teil des Beobachtungslichts 141 aus dem Beobachtungsstrahlengang 131 aus und führt es über eine Abbildungsoptik 142 einer ersten Kamera 143 zu.

Im rechten Beobachtungsstrahlengang 132 des Operationsmikroskops gibt es einen Strahlteiler 150. Der Strahlteiler 150 koppelt einen Teil des Beobachtungslichts 151 aus dem rechten Beobachtungsstrahlengang 132 aus und lenkt es durch ein Filter 152, das für Fluoreszenzlicht des Fluoreszenzfarbstoffs Indocyianyngrün (ICG) abgestimmt ist und im wesentlichen nur für Licht aus dem Wellenlängenbereich zwischen 820nm und 870nm durchlässig ist, über eine Abbildungsoptik 153 auf eine Kamera 154.

Im rechten Beobachtungsstrahlengang 132 des Mikroskops 100 ist ein Strahlteiler 160 vorgesehen. Dieser Stahlteiler 160 dient zum Einkoppeln von Bild- und Anzeigesignalen eines Displays 161, dem eine Abbildungsoptik 162 zugeordnet ist.

Das Operationsmikroskop 100 ist für eine Untersuchung des Objektbereichs 117 mit Weißlicht ausgelegt. Der Objektbereich 117 kann jedoch mit dem Operationsmikroskop 100 durch Beobachten von Fluoreszenzlicht, das im Objektbereich 117 erzeugt wird, untersucht werden.

Zur Erzeugung von Fluoreszenzlicht im Objektbereich bedarf eines Fluoreszenzfarbstoffs, der sich im Objektbereich befindet. Ein Fluoreszenzfarbstoff kann mittels Beleuchtungslicht geeigneter spektraler Zusammensetzung zu Fluoreszenz angeregt werden. Hierdurch entsteht Licht, dessen spektrale Charakteristik von derjenigen des Anregungslichts verschieden ist.

Die Beleuchtungseinrichtung 101 ist so ausgelegt, dass mit dem Beleuchtungslicht 116, welches das Leuchtfeld 118 im Objektbereich bildet, die Farbstoffe ICG und 5-ALA, die sich zur Anreicherung von Körpergewebe eines Patienten in einer chirurgischen Operation eignen, zu Fluoreszenz angeregt werden können.

Der Farbstoff ICG kann mit Licht der Wellenlänge 780nm im roten Spektralbereich zu Fluoreszenz angeregt werden. Das von dem Farbstoff abgegebene Fluoreszenzlicht liegt bei 835nm im infraroten Spektralbereich und ist für das menschliche Auge nicht sichtbar.

Um ein auf Fluoreszenzlicht des Farbstoffs ICG basierende Bild des Objektbereichs 117 im Operationsmikroskop sichtbar machen zu können, bedarf es einer Bildwandlung. Dies erfolgt mittels der Kamera 154 im Operationsmikroskop 100. Der Kamera 154 wird durch das Filter 152 nur Licht aus einem Wellenlängenbereich zugeführt, dessen spektrale Zusammensetzung derjenigen des Fluoreszenzlichts von ICG entspricht. Die Kamera 154 ist mit dem Display 161 verbunden. Hierdurch wird das von der Kamera 154 erfasste Bildsignal, das für das menschliche Auge nicht sichtbar ist, in ein Bildsignal gewandelt, das der Mensch sehen kann. Dieses Bild wird durch Einkoppeln in den rechten Beobachtungsstrahlengang bei Aktivierung der Beleuchtungseinrichtung für die Anregung der Fluoreszenz von ICG sichtbar gemacht.

Bilder des Objektbereichs 117 aus Fluoreszenzlicht, denen Fluoreszenzlicht des Farbstoffs Blau 400 zugrunde liegt, können dagegen im Operationsmikroskop 100 mit bloßem Auge beobachtet werden. Um das Operationsmikroskop 100 in einem Betriebsmodus für die Beobachtung der Fluoreszenz des Farbstoffs Blau 400 zu versetzen, wird durch Verstellen des Filterrades 114 in der Beleuchtungseinrichtung 101 ein Filter in den Beobachtungsstrahlengang geschaltet, das für Licht, mit dem die Fluoreszenz des Farbstoffs Blau 400 angeregt werden kann, durchlässig ist, das aber Licht der Fluoreszenzwellenlängen dieses Farbstoffs nicht transmittiert.

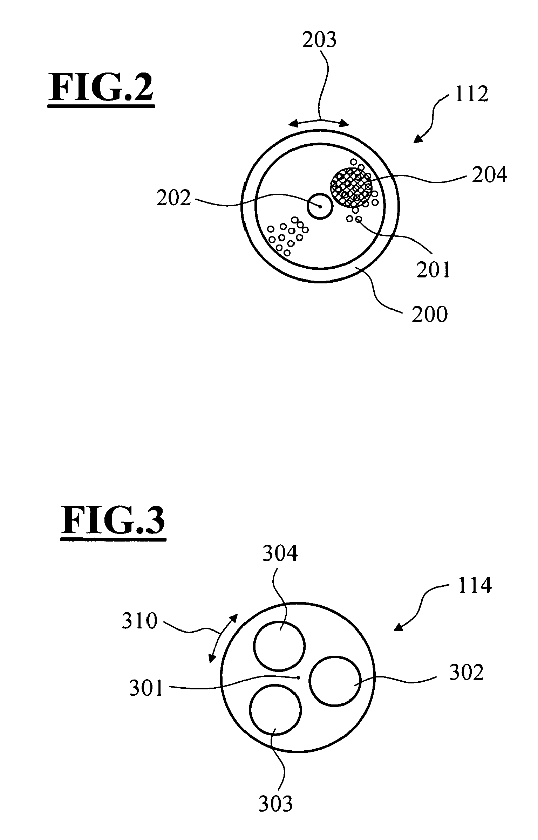

Fig. 2 zeigt die Filtereinheit 112 zu Abschwächung der Intensität des mit der Hochleistungslichtquelle 102 der Beleuchtungseinrichtung erzeugten Beleuchtungslichts. Die Filtereinheit 112 ist als Siebfilter ausgebildet und umfasst eine lichtundurchlässige Siebfilterscheibe 200, in der Durchtrittsöffnungen 201 für Licht mit unterschiedlicher Größe vorgesehen sind. Indem die Scheibe 200 um ihre Achse 202 entsprechend dem Doppelpfeil 203 im Beleuchtungsstrahlengang 204 der Beleuchtungseinrichtung bewegt wird, steuert sie den Lichtfluss nach Anzahl und Größe der Lichtdurchtrittsöffnungen 201, die sich im Beleuchtungsstrahlengang 204 befinden.

Fig. 3 zeigt das Filterrad 114 der Beleuchtungseinrichtung 101 aus Fig. 1 zur Einstellung der spektralen Zusammensetzung des von der Hochleistungslichtquelle 102 erzeugten Beleuchtungslichts. Das Filterrad 114 kann um eine Achse 301 im Beleuchtungsstrahlengang entsprechend dem Doppelpfeil 310 bewegt werden. Es enthält Filterscheiben 302, 303 und 304, die das Beleuchtungslicht der Hochleistungslichtquelle 102 aus Fig. 1 für einen Betrieb des Operationsmikroskops im Weißlichtmodus und in einem Modus, in dem der Farbstoff ICG zur Fluoreszenz angeregt werden kann sowie in einem Modus, der es ermöglicht, den Farbstoff 5-ALA zu Fluoreszenz anzuregen.

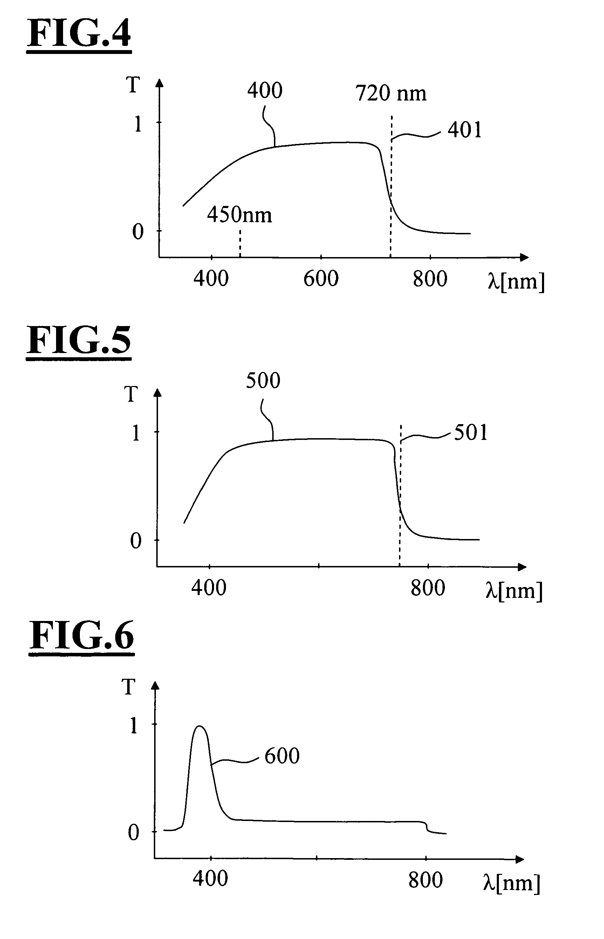

Die Fig. 4 zeigt die Filtercharakteristik 400 der Filterscheibe 302, die bei Betrieb des Operationsmikroskops im Weißlichtmodus in den Beleuchtungsstrahlengang geschaltet ist. Die Filterscheibe 302 wirkt als Wärmeschutzfilter. Die Filterscheibe 302 ist durchlässig für Beleuchtungslicht im sichtbaren Spektralbereich, dessen Wellenlänge zwischen 400nm und 720nm liegt. Die Filtercharakteristik 400 fällt für Licht der Wellenlänge unterhalb 450nm ab. Bei 720nm gibt es eine Filterkante 401. Licht im UV-Bereich, dessen Wellenlänge unterhalb von 400nm liegt und Licht mit Wellenlängen >720nm im infraroten Spektralbereich wird von der Filterscheibe 301 aus Fig. 4 geblockt. Dies gewährleistet, dass beim Betrieb des Operationsmikroskops im Weißlichtmodus Patientengewebe nicht unnötig Wärmestrahlung und UV-Strahlung ausgesetzt wird, die keine für den Menschen sichtbaren Beitrag zum Bild eines Objektbereichs liefert, der mit dem Operationsmikroskop beobachtet werden kann.

Die Fig. 5 zeigt die Filtercharakteristik 500 der Filterscheibe 303 aus Fig. 3. Die Filterscheibe 303 wirkt als Infrarot-Fluoreszenz-Anregungsfilter. Diese Filterscheibe wird bei Betrieb des Operationsmikroskops für die Visualisierung von Bilder in den Beleuchtungsstrahlengang eingebracht, welche auf der Fluoreszenz von ICG basieren. Die Filtercharakteristik 500 hat eine steile Filterkante 501 bei der Wellenlänge 780nm. Dies gewährleistet, dass mit der Beleuchtungseinrichtung Licht, dessen Wellenlänge in der Anregungsbande für die Fluoreszenz von ICG liegt, zum Objektbereich geführt wird, gleichzeitig dabei jedoch der Objektbereich nicht Beleuchtungslicht belastet wird, dessen Wellenlänge im Bereich der Fluoreszenzwellenlänge von ICG liegt.

Fig. 6 zeigt die Filtercharakteristik 600 der Filterscheibe 304 im Filterrad 114 aus Fig. 3. Die Filterscheibe 304 wirkt als Blaulicht-Fluoreszenz-Anregungsfilter. Die Filterscheibe 304 wird für den Betrieb des Operationsmikroskop in einem Modus zur Anregung der Fluoreszenz des Farbstoffs 5-ALA in den Beleuchtungsstrahlengang der Beleuchtungseinrichtung 101 aus Operationsmikroskop 100 aus Fig. 1 geschaltet. Die Filtercharakteristik 600 gewährleistet die Transmission von Licht im UV-Bereich unterhalb der Wellenlänge von 400nm, wo die Fluoreszenz des Farbstoffs 5-ALA angeregt werden kann.

Mit Beleuchtungslicht der Beleuchtungseinrichtung eines Operationsmikroskops kann Patientengewebe durch thermische und phototoxische Belastung geschädigt werden. Die Gefahr von Gewebeschädigungen ist dabei umso größer, je intensitätsstärker das Beleuchtungslicht ist, mit dem ein Operationsbereich ausgeleuchtet wird. Um die Farbstoffe ICG und 5-ALA mit der Hochleistungsquelle 102 in der Beleuchtungseinrichtung 101 des Operationsmikroskops 100 aus Fig. 1 zu Fluoreszenz anzuregen, muss sehr intensitätsstarkes Beleuchtungslicht bereitgestellt werden.

Damit bei Routinebetrieb des Operationsmikroskops 100 aus Fig. 1 das versehentliche Schädigen von Patientengewebe vermieden wird, hat die Beleuchtungseinrichtung 101 eine Steuereinheit 170, welche das Einstellen der Intensität des zum Operationsbereich geführten Beleuchtungslichts ermöglicht, die jedoch je nach Betriebsmodus der Beleuchtungseinrichtung gewährleistet, dass die maximale Beleuchtungslichtintensität einen vorgegebenen, einstellbaren Schwellwert nicht überschreitet.

Die Steuereinheit 170 umfasst einen Datenspeicher 171 und ein Bedienungsmodul 172 mit einem berührungssensitiven Bildschirm 173 als Ein- und Ausgabeschnittstelle. Über den berührungssensitiven Bildschirm 173 kann der Betrieb des Operationsmikroskops 100 für Beleuchtung des Operationsbereichs mit Weißlicht, für Beleuchtung des Operationsbereichs mit Licht zur Anregung der Fluoreszenz von ICG und zur Beleuchtung des Operationsbereichs mit Licht zur Anregung der Fluoreszenz des Farbstoffs 5-ALA aktiviert werden. Hierzu müssen von einer Bedienperson entsprechende Steuerungsfelder auf dem Bildschirm berührt werden.

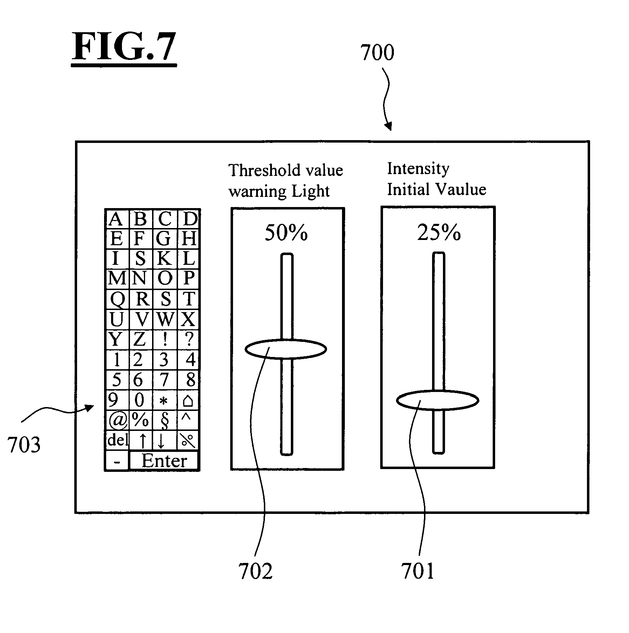

Die Fig. 7 zeigt ein Eingabemenü 700 des berührungssensitiven Bildschirms 173 im Operationsmikroskop 100 aus Fig. 1. Die Einstellung von Werten für den Lichtquellen-Intensitäts-Aktivierungswert und für die Intensität des von der Beleuchtungseinrichtung abgegebenen Beleuchtungslichts kann über sogenannte "Slider" 701, 702 eingestellt werden. Das Eingabemenü umfasst auch eine numerische Tastatur 703. Diese numerische Tastatur 703 ermöglicht das Eingeben personifizierter Gerätekonfigurationen. Durch Eingabe eines persönlichen Datencodes über den berührungssensitiven Bildschirm 173 der Steuereinrichtung der Beleuchtungseinrichtung 101 aus Fig. 1 kann so eine persönliche Voreinstellung des Geräts aufgerufen werden. Mittels der numerischen Tastatur 703 ist es möglich, die im Datenspeicher abgelegten Aktivierungswerte für die Intensität des von der Beleuchtungseinrichtung 101 bereitgestellten Beleuchtungslichts im Fall von Weißlicht, von Licht zur Anregung der Fluoreszenz von ICG sowie von Licht zur Anregung der Fluoreszenz des Farbstoffs 5-ALA einzustellen. Aus Sicherheitsgründen ist vorgesehen, dass dazu über die Tastatur zunächst ein Lizenzschlüssel eingegeben wird. Hierdurch wird die Steuereinrichtung 170 aus Fig. 1 in einen Service-Betriebsmodus versetzt und ein Eingabemenü zur Einstellung der Aktivierungswerte aufgerufen.

Der Steuereinheit 170 ist eine Patientenschädigungs-Warneinrichtung 174 zugeordnet. Bei Einstellung von Betriebsparametern für die Beleuchtungseinrichtung, die eine Patientenschädigung durch Beleuchtungslicht nicht ausschließen, wird ein Warnsignalgenerator 175 in der Patientenschädigungs-Warneinrichtung 174 angesteuert. Dieser gibt dann ein akustisches und ein optisches Warnsignal ab. Alternativ kann der Warnsignalgenerator 175 auch nur zur Abgabe eines akustischen Warnsignals oder nur eines optischen ausgebildet sein. Es ist auch möglich, den Warnsignalgenerator für die Abgabe eines haptisch erfassbaren Warnsignals auszuführen.

Bei Aktivierung des "Weißlichts" wird durch Drehen des Filterrads 114 die Filterscheibe 302 aus Fig. 3 in den Beleuchtungsstrahlengang bewegt. Darauf wird die Siebfilterscheibe 200 aus Fig. 2 der Filtereinheit 112 auf einen Weißlichtbetrieb-Aktivierungswert eingestellt. Erst dann erfolgt eine Inbetriebnahme der Hochleistungslichtquelle 102. Der Weißlicht-Aktivierungswert entspricht einem in dem Datenspeicher 171 abgelegten Einstellungswert für die Scheibe 200 der Filtereinheit 112. Dieser Einstellungswert ist vom Hersteller im Datenspeicher 171 abgelegt. Er hat vorzugsweise einen Wert für die Abschwächung von Licht der Hochleistungslichtquelle 102 auf 25% der von der Hochleistungslichtquelle 102 bereitgestellten Lichtmenge.

Der berührungssensitive Bildschirm 173 ermöglicht es, einen Weißlichtbetriebs-Aktivierungswert einzustellen. Wird der Weißlichtbetriebs-Aktivierungswert auf einen Wert eingestellt, der den Wert des im Datenspeicher 171 abgelegten Herstellerwerts für den Weißlichtbetriebs-Aktivierungswert überschreitet, erfolgt die Ausgabe eines Warnsignals mit dem Warnsignalgenerator 175 in der Patientenschädigungs-Warneinrichtung 174.

Der berührungssensitive Bildschirm 173 ermöglicht darüber hinaus, die Intensität des von der Beleuchtungseinrichtung bereitgestellten Beleuchtungslichts bei aktiviertem Weißlichtbetrieb der Beleuchtungseinrichtung vorzunehmen. Durch Ansteuern der Scheibe 200 aus Fig. 2 der Filtereinheit 112 kann die Intensität des Beleuchtungslichts, das von der Hochleistungslichtquelle 102 der Beleuchtungseinrichtung 101 im Operationsmikroskop 100 aus Fig. 1 herrührt, zwischen dem Wert 0 und einem Maximalwert verändert werden, der dem Weißlichtbetrieb-Aktivierungswert entspricht.

Entsprechendes ist im Betriebsmodus der Beleuchtungseinrichtung 101 für die Anregung der Fluoreszenz von ICG möglich. Wird dieser Betriebsmodus über den berührungssensitiven Bildschirm 173 aktiviert, so bewegt sich zunächst die Filterscheibe 303 in den Beleuchtungsstrahlengang und die Siebfilterscheibe 200 wird auf einen für die Anregung der Fluoreszenz von ICG günstigen Ausgangswert eingestellt, in dem keine Gefahr der Schädigung von Patientengewebe besteht. Dieser Aktivierungswert der Siebfilterscheibe 200 im Betriebsmodus der Anregung der Fluoreszenz von ICG ist wiederum ein herstellerseitig in den Datenspeicher 171 eingegebener Wert.

Er entspricht beispielsweise einer Abschwächung des Lichts der Hochleistungslichtquelle 102 mittels der Siebfilterscheibe 200 aus Fig. 2 auf 50% des von der Hochleistungslichtquelle 102 bereitgestellten Lichtes.

Der berührungssensitive Bildschirm 173 ermöglicht diesen Aktivierungswert für Beleuchtungslicht zur Anregung der Fluoreszenz von ICG einzustellen. Wird dieser Aktivierungswert eingestellt, so erzeugt der Warnsignalgenerator 175 in der Patientenschädigungs-Warneinrichtung 174 ein Warnsignal, wenn ein Aktivierungswert gewählt wird, der über demjenigen des im Datenspeicher 171 abgelegten herstellerseitig abgespeicherten Aktivierungswerts liegt.

Im Betriebsmodus der Beleuchtungseinrichtung für die Anregung der Fluoreszenz von ICG kann die Intensität des bereitgestellten Beleuchtungslichts über den berührungssensitiven Bildschirm 173 zwischen einem Minimalwert und einem Maximalwert eingestellt werden. Der Maximalwert der Einstellung der Siebfilterscheibe 200 entspricht dem Intensitätswert für das von der Beleuchtungseinrichtung 101 bereitgestellte Beleuchtungslicht bei Aktivierung des Betriebsmodus für Fluoreszenz von ICG.

Wird das Operationsmikroskop für den Betrieb Fluoreszenz von 5-ALA aktiviert, wofür eine entsprechende Eingabemöglichkeit am berührungssensitiven Bildschirm 173 vorgesehen ist, so erfolgt eine Verstellung der Filterscheibe 303 aus Fig. 3 im Beleuchtungsstrahlengang. Die Siebfilterscheibe 200 aus Fig. 2 wird auf einen 5-ALA-Aktivierungswert eingestellt. Daraufhin wird die Hochleistungsquelle 102 im Operationsmikroskop 100 aus Fig. 1 in Betrieb genommen.

Der 5-ALA-Aktivierungswert ist ein im Datenspeicher 171 abgelegter Einstellungswert für die Siebfilterscheibe 200. Dieser Einstellungswert ist vom Hersteller konfiguriert und im Datenspeicher 171 abgespeichert. Er entspricht beispielsweise einer Abschwächung von Licht der Hochleistungslichtquelle von 0, d.h. einer Einstellung der Siebfilterscheibe für maximale Beleuchtungsintensität.

Es ist möglich, mittels des berührungssensitiven Bildschirms 173 wiederum diesen Abschwächungswert bei Aktivierung des Operationsmikroskop-Betriebsmodus für Beobachtung der Fluoreszenz des Farbstoffs 5-ALA einzustellen. Wird dabei der herstellerseitig im Datenspeicher 171 abgelegte Wert für den Aktivierungswert überschritten, so erfolgt wieder eine Warnsignalabgabe mittels des Warnsignalgenerators 174 in der Patientenschädigungs-Warneinrichtung 174.

Über das in Fig. 7 gezeigte Eingabemenü am berührungssensitiven Bildschirm 173 des Operationsmikroskops aus Fig. 1 kann mittels des Sliders 702 der Sicherheitsgrenzwert des von der Beleuchtungseinrichtung 101 aus Fig. 1 abgegebenen Beleuchtungslichts in einem Einstellbereich variiert werden. Dieser Sicherheitsgrenzwert kann nur nach Eingabe eines Sicherheitscodes über die Tastatur 703 am Eingabemenü 700 des berührungssensitiven Bildschirms 173 aus Fig. 1 modifiziert werden.

Der Slider 701 dient zur Einstellung des Aktivierungswertes der bei Aktivierung der Beleuchtungseinrichtung 101 abgegebenen Intensität des Beleuchtungslichts für Weißlichtbetrieb, für Betrieb zur Anregung der Fluoreszenz von ICG und für Betrieb zur Anregung der Fluoreszenz des Farbstoffs 5-ALA. Die entsprechende Einstellung ist wiederum erst nach Eingabe eines Sicherheitscodes über die Tastatur 703 im Eingabemenü 700 aus Fig. 7 möglich.

Wird bei Einstellung der Schwellwerte von einer Bedienperson ein anderer Wert eingestellt, als er seitens des Herstellers des Gerätes im Datenspeicher 171 der Steuereinheit 170 abgelegt ist, so wird mittels der Patientenschädigungs-Warneinrichtung 174 der Beleuchtungseinrichtung 101 aus Fig. 1 ein Warnsignal abgegeben. Vorzugsweise wird dieses Warnsignal mit einer Anzeige am berührungssensitiven Bildschirm 173 kombiniert, die wie folgt lautet: "Achtung: Hohe Lichtintensität kann zu Gewebeschäden führen! Bitte erwägen Sie die Verwendung möglichst geringer Lichtleistung." Erst wenn über eine entsprechende Eingabe am berührungssensitiven Bildschirm dieser Warnhinweis quittiert ist, kann der betreffende Schwellwert verändert werden.

Vorzugsweise erfolgt dieser Warnhinweis bei jedem Wechsel der Bedienperson des Operationsmikroskops, wenn diese einen anderen Wert einstellen will, als es vom Hersteller empfohlen ist.

Für den Fall, dass von einer Bedienperson der Maximalwert, für die Intensität des von der Beleuchtungseinrichtung abgegebenen Beleuchtungslichts auf einen Wert eingestellt wird, der geringer ist als der betreffende Aktivierungswert bei Aktivierung der Beleuchtungseinrichtung in einem der möglichen Betriebsmodi für die Beleuchtungseinrichtung 101, so wird in der Steuereinrichtung 170 aus Fig. 1 der Wert der bei Aktivierung der Beleuchtungseinrichtung 101 abgegebene Lichtintensität auf den von der Bedienperson eingestellten Wert für die maximal abgegebene Lichtleistung abgesenkt.

Die Steuereinheit 170 enthält einen Regelkreis 190. Dieser Regelkreis 190 ermöglicht es, die Beleuchtungseinrichtung 101 in einem Regelbetriebsmodus zu betreiben. Der Regelkreis 190 ist mit dem Beleuchtungslicht-Intensitätsdetektor 120 verbunden. Er gibt ein Stellsignal an die einstellbare Filtereinheit 112 ab.

Der Regelbetriebmodus kann durch Eingabe am berührungssensitiven Bildschirm 173 eingestellt werden. Er ermöglicht es, die Intensität des von der Beleuchtungseinrichtung 101 im Operationsmikroskop 100 aus Fig. 1 bereitgestellten Beleuchtungslichts auf einen vorgegebenen Wert zu regeln. Hierzu wird das von dem Beleuchtungslicht-Intensitätsdetektor 120, der sich auf der Rückseite 119 des Umlenkspiegels 116 im Operationsmikroskop 100 aus Fig. 1 befindet, der momentan erfasste Wert für die Lichtintensität dem Regelkreis 190 in der Steuereinheit 170 zugeführt. Dieser Wert wird dort mit einem Sollwert verglichen. Entsprechend der Abweichung von Istwert und Sollwert wird dann ein Stellsignal auf die Filtereinheit 112 zur Abschwächung der Intensität des Beleuchtungslichts der Hochleistungsquelle 102 in der Beleuchtungseinrichtung 101 aus Fig. 1 abgegeben.

Schließlich enthält die Beleuchtungseinrichtung 101 des Operationsmikroskops 100 aus Fig. 1 eine Lampenwechsel-Erfassungseinrichtung 180. Die Lampenwechsel-Erfassungseinrichtung 180 ist mit der Steuereinheit 170 verbunden. Wenn die Lampenwechsel-Erfassungseinrichtung 180 einen Lampenwechsel detektiert, wird ein Lampenwechsel-Informationssignal an die Steuereinheit 170 abgegeben. Auf dieses Lampenwechsel-Informationssignal nimmt die Steuereinheit 170 eine neue Einstellung des Aktivierungswertes zu einem jeden möglichen Betriebsmodi der Beleuchtungseinrichtung 101 vor: Der jeweilige Aktivierungswert für Weißlichtbetrieb, für Anregung der Fluoreszenz von ICG und für Anregung der Fluoreszenz von 5-ALA wird dann auf einen in einem Datenspeicher abgelegten, vom Hersteller eingestellten Ausgangswert eingestellt.

Nach jedem Lampenwechsel werden von der Steuereinheit 170 unabhängig von den aktuellen Benutzereinstellungen, die von einer Bedienperson über den berührungssensitiven Bildschirm 173 vorgenommen wurden, die Aktivierungswerte für die Lichtintensität bei Betrieb der Beleuchtungseinrichtung im Weißlichtmodus, im Modus für die Anregung des Farbstoffs ICG und im Modus für die Anregung des Farbstoffs 5-ALA sowie die entsprechenden maximal einstellbaren Lichtintensitätswerte bei der Beleuchtungseinrichtung 101 aus Fig. 1 auf die im Datenspeicher 171 abgespeicherten Schwellwerte zurückgesetzt. Dabei bleiben jedoch jeweils die von der betreffenden Bedienperson eingestellten Werte für die Ausgangsintensität der Lichtleistung und die Lichtintensität, bei der eine Patientenschädigungs-Warnung erfolgt, im Datenspeicher 171 erhalten. Auch hat die Bedienperson die Möglichkeit, nach einem Lampenwechsel und dem automatischen Zurücksetzen der von der Beleuchtungseinrichtung 101 abgegebenen Lichtleistung wieder die Beleuchtungsstärke einzustellen, mit der vor dem Lampenwechsel das Operationsmikroskop konfiguriert war.

Das Operationsmikroskop aus Fig. 1 ist darüber hinaus für einen Notbetrieb ausgelegt. Für den Fall, dass das Bedienmodul 171 mit dem berührungssensitiven Bildschirm 173 ausfällt, bewirkt die Steuereinrichtung 170, dass die Filtereinheit 112 die Intensität des von der Beleuchtungseinrichtung abgegebenen Beleuchtungslichts auf einen Wert von 70% der maximalen möglichen Lichtleistung einstellt.

Um eine Bedienperson des Operationsmikroskops 100 aus Fig. 1 auf die Möglichkeit der Schädigung des Patienten mit Beleuchtungslicht hinzuweisen, wird auf dem berührungssensitiven Bildschirm vorzugsweise in roter Textdarstellung die von der Beleuchtungseinrichtung abgegebene Lichtintensität angezeigt, für den Fall dass diese dem eingestellten Schwellwert entspricht oder dessen Wert übersteigt. Wenn die Intensität des von der Beleuchtungseinrichtung 101 aus Fig. 1 abgegebenen Beleuchtungslichts größer oder gleich dem eingestellten Schwellwert ist, wird darüber hinaus im Beobachtungsstrahlengang 132 des Operationsmikroskops 101 aus Fig. 1 im Okulareinblick 136 mittels des Displays 161 eine Warnanzeige sichtbar gemacht. Diese Warnanzeige umfasst das numerische Anzeigen der Lichtintensität in Verbindung mit zusätzlichen Ausrufezeichen. Eine gute Warnwirkung lässt sich erzielen, indem die Anzeige blinkt, vorzugsweise mit einer Frequenz von 0,5 Hz in einem Zeitraum von 5 Sekunden.

Wird der aktuell eingestellte Intensitäts-Schwellwert von der Intensität des von der Beleuchtungseinrichtung 101 tatsächlich abgegebenen Beleuchtungslichts unterschritten, so wird die Anzeige des Warnhinweises auf den berührungssensitiven Bildschirm und auf dem Display 161, das im Beobachtungsstrahlengang 132 sichtbar ist, beendet.

Das Anzeigen von Informationen mittels des Displays 161 im Beobachtungsstrahlengang 132 ist dann ungünstig, wenn das Operationsmikroskop zur Beobachtung von Fluoreszenz betrieben wird. Im Vergleich zu Normallicht ist nämlich das mittels Fluoreszenz erzeugte Licht aus einem Operationsbereich relativ intensitätsarm. D.h., ein auf Fluoreszenz basierendes Bild in einem Operationsmikroskop ist üblicherweise dunkel. Dann aber stört zusätzliche Anzeigeinformation in einem Okulareinblick. In den Betriebsmodi des Operationsmikroskops 100 für Fluoreszenz erfolgt deshalb die Anzeige eines Warnhinweises nicht mittels des Displays 161 im rechten Beobachtungsstrahlengang 132 sondern nur als Anzeige auf dem berührungssensitiven Bildschirm 173.

Die beschriebene Beleuchtungseinrichtung 101 ermöglicht darüber hinaus, bei Systemstart eine Warnmeldung auszugeben, wenn die von der Beleuchtungseinrichtung 101 bereitgestellte Lichtintensität mehr als 25% eines gerätespezifischen Maximalwerts entspricht.

Es sei bemerkt, dass die Intensität des von der Beleuchtungseinrichtung 101 bereitgestellten Beleuchtungslichts nicht nur durch Verstellen der Siebfilterscheibe 200 variiert werden kann, sondern auch durch Verändern des Lampenstromes für die Hochleistungslichtquelle 102.

## Patentansprüche

1. Operationsmikroskop (100), insbesondere für die Neurochirurgie,
- mit einer Beleuchtungseinrichtung (101) für das Bereitstellen von Beleuchtungslicht in einem mit dem Operationsmikroskop untersuchten Operationsbereich (117);
- die eine Hochleistungslichtquelle (102) enthält; und
- Intensitätseinstellungsmittel (112) zum Einstellen der Intensität des zum Operationsbereich (117) geführten Beleuchtungslichts (116) zwischen einem Maximalwert und einem Minimalwert umfasst;
- mit einer Steuereinheit (170) für die Beleuchtungseinrichtung (101), die ein Bedienungsmodul (172) aufweist, über das die Beleuchtungseinrichtung (101) aktiviert und gesteuert werden kann;
- wobei die Steuereinheit (170) zur Einstellung der Intensität des zum Operationsbereich (117) geführten Beleuchtungslichts (116) mit den Intensitätseinstellungsmitteln (112) in Wirkverbindung steht;
**dadurch gekennzeichnet, dass**
- ein Signalgenerator (175) vorgesehen ist, der ein Warnsignal abgibt, wenn über das Bedienungsmodul (172) eine Intensität von Beleuchtungslicht eingestellt wird, die einen in einem Speicher (171) abgelegten Sicherheitsgrenzwert überschreitet.

2. Operationsmikroskop nach Anspruch 1, **dadurch gekennzeichnet, dass** bei Aktivierung der Beleuchtungseinrichtung (101) über das Bedienungsmodul (172) die Steuereinheit (170) eine Einstellung der Filtereinheit (112) auf einen ersten Beleuchtungseinrichtungs-Aktivierungswert bewirkt, bei dem das Licht der Hochleistungslichtquelle (102) in der Beleuchtungseinrichtung (101) abgeschwächt wird.

3. Operationsmikroskop nach Anspruch 2, **dadurch gekennzeichnet, dass** das Bedienungsmodul (172) Mittel (173) zur Einstellung des ersten Beleuchtungseinrichtungs-Aktivierungswerts aufweist.

4. Operationsmikroskop nach Anspruch 3, **dadurch gekennzeichnet, dass** ein Signalgenerator (175) vorgesehen ist, der ein Warnsignal abgibt, wenn über das Bedienungsmodul (172) ein erster Beleuchtungseinrichtungs-Aktivierungswert eingestellt wird, der einen in einem Speicher (171) abgelegten Sicherheitsgrenzwert für den ersten Beleuchtungseinrichtungs-Aktivierungswert überschreitet.

5. Operationsmikroskop nach Anspruch 1 bis 4, **dadurch gekennzeichnet, dass** die Beleuchtungseinrichtung (101) ein Filter (302, 303, 304) zur Einstellung der spektralen Zusammensetzung des Beleuchtungslichts (116) aus der Beleuchtungseinrichtung aufweist.

6. Operationsmikroskop nach Anspruch 5, **dadurch gekennzeichnet, dass** das spektrale Filter als Wärmeschutzfilter (302) ausgebildet ist.

7. Operationsmikroskop nach Anspruch 5, **dadurch gekennzeichnet, dass** das spektrale Filter als Infrarot-Fluoreszenz-Anregungsfilter (303) ausgebildet ist.

8. Operationsmikroskop nach Anspruch 7, **dadurch gekennzeichnet, dass** das spektrale Filter als Blaulicht-Fluoreszenz-Anregungsfilter (304) ausgebildet ist.

9. Operationsmikroskop nach Anspruch 7, **dadurch gekennzeichnet, dass** das Bedienungsmodul eine Eingabeeinheit (173) zur Einstellung eines Infrarot-Fluoreszenz-Betriebsmodus aufweist, in dem das Infrarot-Fluoreszenz-Anregungsfilter (303) in den Beleuchtungsstrahlengang (113) der Beleuchtungseinrichtung (101) geschaltet ist.

10. Operationsmikroskop nach Anspruch 9, **dadurch gekennzeichnet, dass** die Steuereinheit (170) bei Einstellung des Infrarot-Fluoreszenz-Betriebsmodus über die Eingabeeinheit (173) des Bedienungsmoduls (172) eine Einstellung der Filtereinheit (112) auf einen zweiten Beleuchtungseinrichtungs-Aktivierungswert bewirkt.

11. Operationsmikroskop nach Anspruch 10, **dadurch gekennzeichnet, dass** das Bedienungsmodul (172) Mittel (173) zur Einstellung des zweiten Beleuchtungseinrichtungs-Aktivierungswerts aufweist.

12. Operationsmikroskop nach Anspruch 11, **dadurch gekennzeichnet, dass** ein Signalgenerator (175) vorgesehen ist, der ein Warnsignal abgibt, wenn über das Bedienungsmodul (172) ein zweiter Beleuchtungseinrichtungs-Aktivierungswert eingestellt wird, der einen ein einem Speicher (171) abgelegten Sicherheitsgrenzwert für den zweiten Beleuchtungseinrichtungs-Aktivierungswert überschreitet.

13. Operationsmikroskop nach Anspruch 7, **dadurch gekennzeichnet, dass** das Bedienungsmodul (172) eine Eingabeeinheit (173) zur Einstellung eines Blaulicht-Fluoreszenz-Betriebsmodus aufweist, in dem das Blaulicht-Fluoreszenz-Anregungsfilter (303) in den Beleuchtungsstrahlengang (113) der Beleuchtungseinrichtung (101) geschaltet ist.

14. Operationsmikroskop nach Anspruch 11, **dadurch gekennzeichnet, dass** die Steuereinheit (170) bei Einstellung des Blaulicht-Fluoreszenz-Betriebsmodus über die Eingabeeinheit (173) des Bedienungsmoduls (172) eine Einstellung der Filtereinheit (112) auf einen dritten Beleuchtungseinrichtungs-Aktivierungswert bewirkt.

15. Operationsmikroskop nach Anspruch 12, **dadurch gekennzeichnet, dass** das Bedienungsmodul (172) Mittel (173) zur Einstellung des dritten Beleuchtungseinrichtungs-Aktivierungswerts aufweist.

16. Operationsmikroskop nach Anspruch 11, **dadurch gekennzeichnet, dass** ein Signalgenerator (175) vorgesehen ist, der ein Warnsignal abgibt, wenn über das Bedienungsmodul (172) ein dritter Beleuchtungseinrichtungs-Aktivierungswert eingestellt wird, der einen in einem Speicher (171) abgelegten Sicherheitsgrenzwert für den dritten Beleuchtungseinrichtungs-Aktivierungswert überschreitet.

17. Operationsmikroskop nach einem der Ansprüche 1 bis 16, **dadurch gekennzeichnet, dass** das Bedienungsmodul (172) Mittel (173) zur Einstellung der Filtereinheit (112) zwischen einem ersten Wert für minimale Intensität des Beleuchtungslichts der Beleuchtungseinrichtung und einem zweiten Wert für maximale Intensität des Beleuchtungslichts der Beleuchtungseinrichtung aufweist.

18. Operationsmikroskop nach Anspruch 17, **dadurch gekennzeichnet, dass** der Wert für maximale Intensität des Beleuchtungslichts dem ersten, zweiten oder dritten Beleuchtungseinrichtungs-Aktivierungswert entspricht.

19. Operationsmikroskop nach Anspruch 17, **dadurch gekennzeichnet, dass** das Bedienungsmodul (172) Mittel (173) zur Einstellung des zweiten Werts für maximale Intensität des Beleuchtungslichts der Beleuchtungseinrichtung aufweist.

20. Operationsmikroskop nach einem der Ansprüche 1 bis 19, **dadurch gekennzeichnet, dass** eine Lampenwechsel-Erfassungseinrichtung (180) vorgesehen ist , die mit der Steuereinheit (170) verbunden ist und bei einem erfassten Lampenwechsel eine Einstellung der Filtereinheit (112) auf einen Ausgangswert bewirkt.

21. Operationsmikroskop nach einem der Ansprüche 1 bis 20, **dadurch gekennzeichnet, dass** ein Sensor (120) zur Erfassung der Intensität des von der Beleuchtungseinrichtung (101) bereitgestellten Beleuchtungslichts vorgesehen ist.

22. Operationsmikroskop nach Anspruch 21, **dadurch gekennzeichnet, dass** Mittel zur Einstellung der Filtereinheit (112) mit einem Regelkreis (190) vorgesehen sind, welche die Intensität des von der Beleuchtungseinrichtung (101) abgegebenen Beleuchtungslichts (116) auf einen vorgegebenen Wert regeln.
